# EUROPÄISCHE PATENTSCHRIFT

(11) **EP 3 736 545 B1**
(45) Veröffentlichungstag und Bekanntmachung des Hinweises auf die Patenterteilung: **19.04.2023**
(21) Anmeldenummer: 19173504.2
(22) Anmeldetag: 09.05.2019
(51) Int. Cl.: G01F 23/284, G01F 23/00

(54) **FÜLLSTANDSMESSEINRICHTUNG**
FILL LEVEL MEASURING DEVICE
DISPOSITIF DE MESURE DE NIVEAU DE REMPLISSAGE

(43) Veröffentlichungstag der Anmeldung: 11.11.2020
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE)
(74) Vertreter: Maiwald GmbH

(56) Entgegenhaltungen:
- US-A- 3 133 192
- US-A- 4 461 576
- US-A1- 2010 101 317
- US-A1- 2018 292 519
- US-A1- 2019 056 258

## Beschreibung

### Gebiet der Erfindung

Die vorliegende Erfindung betrifft eine Füllstandsmesseinrichtung zur Messung eines Füllstandes eines Behälters, sowie ein System umfassend zumindest eine solche Füllstandsmesseinrichtung und einen Behälter.

### Hintergrund der Erfindung

Füllstandmesseinrichtungen sind im Stand der Technik, beispielsweise aus der US 2010/101317 A1 oder der US 2019/056258 A1, bekannt. Häufig wird dabei unter Anwendung unterschiedlicher physikalischer Effekte ein Abstand zwischen der Füllstandsmesseinrichtung und einer Oberfläche eines in einem Behälter angeordneten Mediums ermitteln und der Füllstand des Behälters abgeleitet. Derartige Füllstandsmesseinrichtungen können dabei innerhalb oder außerhalb eines Behälters angeordnet sein, wobei insbesondere akustische, elektromagnetische, induktive, kapazitive oder auch radiometrische Sensoranordnungen zum Einsatz kommen. Die erfassten Daten/Messwerte werden unter Einsatz drahtgebundener oder drahtloser Kommunikationseinrichtungen an eine übergeordnete Datenverarbeitungseinheit übermittelt. Die erfassten Messwerte können dabei nicht nur als Prozessparameter herangezogen werden, sondern auch zum Waren- und Vorratsmanagement.

Die Mehrzahl bekannter Füllstandmesseinrichtungen wird dabei über ortsfeste Drahtverbindungen mit der zum Betrieb notwendigen Energie versorgt. Neuere Entwicklungen ermöglichen es allerdings auch eine Energieversorgung der verschiedenen Komponenten mittels autarker Energiequellen bereitzustellen, so dass in Kombination mit drahtlosen Kommunikationseinrichtungen die Bereitstellung autark arbeitender Einheiten möglich ist. Solche autark arbeitenden Einheiten können dabei in besonders vorteilhafter Weise bei nicht ortsfesten Behältern eingesetzt werden. Einer der häufig als nicht ortsfest eingesetzte Behältertyp ist dabei der sogenannte Intermediate Bulk Container, auch als IBC Behälter bezeichnet wird. IBC Behälter weisen eine volumen- und gewichtsoptimierte Bauweise auf, die insbesondere ein Verladen mit Gabelstablern auf LKW ermöglicht. In der Praxis hat sich dabei allerdings herausgestellt, dass insbesondere bei Be- und Entladevorgängen immer wieder kleinere Karambolagen erfolgen, die zu einer mechanischen Verformung des Behälters und zu einem Ablösen der Füllstandsmesseinrichtung führen können.

Wird ein solches Ablösen der Füllstandsmesseinrichtung vom Behälter nicht erkannt, kann dies dazu führen, dass die Füllstandsmesseinrichtung den Abstand zu einem beliebigen Objekt in seiner Umgebung misst und daher fehlerhafte Messwerte an die übergeordnete Datenverarbeitungseinheit übermittelt, mit der Folge, dass das darauf basierende Waren- und Vorratsmanagement fehlerhaft ist. Im Lichte dieser Problematik ist es eine Aufgabe der vorliegenden Erfindung, eine Füllstandsmesseinrichtung und ein System mit einer solchen Füllstandsmesseinrichtung bereitzustellen, bei der mit höherer Zuverlässigkeit Fehlmessungen ausgeschlossen werden können, insbesondere, wenn eine Füllstandsmesseinrichtung als autarke Einheit eingesetzt wird.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### Zusammenfassung der Erfindung

Die vorliegende Erfindung stellt gemäß Anspruch 1 eine Füllstandsmesseinrichtung zur Messung eines Füllstandes eines Behälters bereit, wobei die Füllstandsmesseinrichtung umfasst: eine Füllstandsmesseinheit, eingerichtet zur Messung eines Füllstandes eines Behälters; zumindest eine Sende-/Empfangseinheit, eingerichtet zur Kommunikation mit einer Datenverarbeitungseinheit; zumindest eine Befestigungseinheit, eingerichtet zur Befestigung der Füllstandsmesseinrichtung an einer Oberfläche des Behälters; zumindest ein Überwachungsmittel, eingerichtet zur Überwachung einer durch die zumindest eine Befestigungseinheit bereitgestellten Befestigung der Füllstandsmesseinrichtung an dem Behälter, wobei die Überwachungsmittel weiterhin eingerichtet sind, um über die Sende-/Empfangseinheit eine Alarmmitteilung an die Datenverarbeitungseinheit zu übermitteln, wenn die Überwachungsmittel ein Lösen der Befestigung der Füllstandmesseinrichtung vom Behälter ermitteln.

Mit anderen Worten schlägt die vorliegende Erfindung vor, eine Füllstandsmesseinrichtung mit einem Überwachungsmittel zur Überwachung einer vorgesehenen Anordnung der Füllstandsmesseinrichtung an einem Behälter auszustatten, so dass Fehlmessungen aufgrund einer fehlerhaften Anordnung der Füllstandsmesseinrichtung an dem Behälter bzw. ein Abfallen der Füllstandsmesseinrichtung vom Behälter möglichst ausgeschlossen werden können. Die Überwachungsmittel sind dabei vorzugsweise derart eingerichtet, dass diese nicht nur ein vollständiges Lösen der Füllstandsmesseinrichtung vom Behälter erfassen können, sondern auch eine fehlerhafte Anordnung der Füllstandsmesseinrichtung an einem Behälter aufgrund eines Teilversagens der Befestigungseinheit.

Eine Füllstandsmesseinrichtung gemäß der vorliegenden Erfindung kann an jeder geeigneten Oberfläche in oder auf einem Behälter angeordnet werden, wobei die Füllstandsmesseinrichtung nicht zwingend unmittelbar auf einer Oberfläche des Behälters angeordnet sein muss, sondern auch beabstandet von einer Oberfläche des Behälters angeordnet sein kann. Unter einer Füllstandsmesseinheit gemäß der vorliegenden Erfindung ist jede Einheit zu verstehen, die unter Anwendung akustischer, elektromagnetischer, induktiver, kapazitiver, radiometrischer oder anderer Effekte eingerichtet ist, um einen Füllstand eines Behälters zu messen. Der Einsatz der vorliegenden Erfindung beschränkt sich nicht auf die Messung bestimmter Medien, sondern umfasst alle Medien unabhängig vom Aggregatszustand.

Unter einer Sende-/Empfangseinheit gemäß der vorliegenden Erfindung ist jede Kommunikationseinrichtung zu verstehen, mit der Daten mit einer Datenverarbeitungseinheit ausgetauscht werden können. Die Sende-/Empfangseinheit ist vorzugsweise zur drahtlosen Kommunikation mit der Datenverarbeitungseinheit eingerichtet, wobei die Sende-/Empfangseinheit vorzugsweise eine Wireless Area Network (WLAN) Schnittstelle, eine Bluetooth Schnittstelle, eine ZigBee Schnittstelle, eine Long Range Wide Area Network (LoRaWAN) Schnittstelle, eine Sigfox Schnittstelle, eine Narrowband IoT (NB-IoT) Schnittstelle, eine MIOTY Schnittstelle oder eine Mobilfunk-Schnittstelle umfasst.

Eine Datenverarbeitungseinheit gemäß der vorliegenden Erfindung kann eine zentrale Datenverarbeitungseinheit sein, beispielsweise ein zentraler Steuerrechner oder eine Datenverarbeitungseinheit zum Waren- und Vorratsmanagement, wobei die vorliegende Erfindung nicht auf eine bestimmte Datenverarbeitungseinheit beschränkt ist. Es können beispielsweise auch dezentrale Cloudspeicher und/oder dezentrale Cloudcomputing Lösungen eingesetzt werden.

Unter einer Befestigungseinheit gemäß der vorliegenden Erfindung ist jedes Mittel zu verstehen, mit der eine Befestigung der Füllstandsmesseinrichtung am Behälter erfolgen kann. Beispielsweise kann die Befestigungseinheit eine Klebeschicht, vorzugsweise eine Acrylatklebeschicht, umfassen, mit der die Füllstandsmesseinrichtung auf dem Behälter aufgeklebt wurde. Alternativ oder zusätzlich kann die Befestigungseinheit ein oder mehrere Spann- oder Bandelemente umfassen, mit der die Füllstandsmesseinrichtung ebenfalls an einem Behälter befestigt werden kann.

Eine Alarmmitteilung gemäß der vorliegenden Erfindung kann beispielsweise als Datensatz übermittelt werden, der vorzugsweise auf einer Anzeigevorrichtung der Datenverarbeitungseinheit dargestellt werden kann. Eine solche Alarmmitteilung kann alternativ oder zusätzlich auch an ein Tablett, Smartphone oder dergleichen übertragen werden, um beispielsweise den Einsatz eines Servicetechnikers zu vereinfachen und/oder zu veranlassen.

Vorteilhafterweise sind die Überwachungsmittel weiterhin eingerichtet, um die Füllstandsmesseinrichtung bzw. die Füllstandsmesseinheit nach Übermittlung der Alarmmitteilung zu deaktivieren. Dadurch kann sichergestellt werden, dass keine bzw. nur wenige fehlerhafte Messwerte an die Datenverarbeitungseinheit übermittelt werden, die möglicherweise zu fehlerhaften Steuersignalen oder automatisierten Warendispositionen führen könnten. In diesem Zusammenhang kann es von Vorteil sein, dass die Datenverarbeitungseinheit eingerichtet ist, nach Erhalt einer Alarmmitteilung die Messwerte eines vorbestimmten Zeitraums vor Erhalt der Alarmmitteilung als "möglicherweise fehlerhafte Messwerte" zu markieren, so dass diese möglichst nicht für ein Steuersignal oder eine Warendisposition herangezogen werden.

Ferner ist es von Vorteil, dass die Füllstandsmesseinrichtung weiterhin zumindest ein Positionsbestimmungsmittel umfasst, vorzugsweise eine GPS-Einheit, und diese eingerichtet ist, um über die Sende-/Empfangseinheit Positionsdaten der Füllstandsmesseinrichtung an die Datenverarbeitungseinheit zu übermitteln, wobei die Alarmmitteilung vorzugsweise Positionsdaten der Füllstandsmesseinrichtung umfasst. Die Positionsdaten werden vorteilhafterweise ebenfalls an ein Tablett, Smartphone oder dergleichen eines Servicetechnikers übertragen. In diesem Zusammenhang ist es von Vorteil, wenn die Positionsdaten auch nach Deaktivierung der Füllstandsmesseinrichtung bzw. der Füllstandsmesseinheit über die Sende-/Empfangseinheit übermittelt werden können, insbesondere, wenn sich die Füllstandsmesseinrichtung beispielsweise während eines Be- oder Entladevorgangs vom Behälter gelöst hat, und somit nicht mehr in unmittelbarer Umgebung des Behälters angeordnet ist.

Gemäß der vorliegenden Erfindung umfassen die Überwachungsmittel zumindest einen Beschleunigungssensor, der eingerichtet ist, um eine Beschleunigung der Füllstandsmesseinrichtung zumindest in eine Richtung parallel zur Erdbeschleunigung zu erfassen, wobei der Beschleunigungssensor vorzugsweise ein 3-Achsen Beschleunigungssensor ist. In diesem Zusammenhang ist es weiterhin erfindungsgemäß vorgesehen, dass die Überwachungsmittel eingerichtet sind, die Beschleunigungswerte des Beschleunigungssensors auszuwerten, um zu ermitteln, ob ein Lösen der Befestigung der Füllstandmesseinrichtung vom Behälter vorliegt. Nachdem insbesondere beim Be- und Entladen mobiler Behälter typische Beschleunigungsmuster auftreten, können diese typischen Beschleunigungsmuster in einer Speichereinheit der Überwachungsmittel hinterlegt werden und mit den tatsächlich auftretenden Beschleunigungsmustern verglichen werden. Ferner ist es bevorzugt, dass der Beschleunigungssensor derart ausgerichtet ist, dass dieser die Erdbeschleunigung misst. Sollte sich die Position eines derart ausgerichteten Beschleunigungssensors insoweit verändern, dass dieser nicht mehr die Erdbeschleunigung misst, kann mit hoher Wahrscheinlichkeit davon ausgegangen werden, dass die Füllstandsmesseinrichtung nicht mehr in der vorgesehenen Position am Behälter befestigt ist und von der Befestigungseinheit nicht mehr in der vorgesehenen Position am Behälter gehalten wird. In diesem Zusammenhang ist darauf hinzuweisen, dass eine Auswertung der Beschleunigungswerte vorzugsweise unmittelbar in einer Datenverarbeitungseinheit/Prozessoreinheit der Füllstandmesseinrichtung erfolgt. Alternativ oder zusätzlich können die Beschleunigungswerte allerdings auch an eine andere Datenverarbeitungseinheit/Prozessoreinheit über die Sende-/Empfangseinheit übermittelt werden und in dieser Datenverarbeitungseinheit/Prozessoreinheit ausgewertet werden.

In einer Ausführungsform der vorliegenden Erfindung umfassen die Überwachungsmittel eine Nahbereichs-Sende-/Empfangseinheit, die zur drahtlosen Kommunikation mit einer am Behälter angeordneten Nahbereichs-Sende-/Empfangseinheit eingerichtet ist. In diesem Zusammenhang ist es bevorzugt, dass die Nahbereichs-Sende-/Empfangseinheit eine RFID-Sende-/Empfangseinheit ist, die zur drahtlosen Kommunikation mit einer am Behälter angeordneten RFID-Sende-/Empfangseinheit eingerichtet ist oder eine NFC-Sende-/Empfangseinheit ist, die zur drahtlosen Kommunikation mit einer am Behälter angeordneten NFC-Sende-/Empfangseinheit eingerichtet ist. Unter einer Nahbereichs-Sende-/Empfangseinheit des Überwachungsmittels ist vorliegend jede Sende-/Empfangseinheit zu verstehen, die eine abstandsabhängige Sende-/Empfangsleistung aufweist. Somit können bei Verlust der Füllstandsmesseinrichtung die korrespondierenden Sende-/Empfangseinheiten keine drahtlose Kommunikation mehr aufbauen und ein Lösen der Füllstandsmesseinrichtung vom Behälter kann ermittelt werden oder die jeweils empfangenen Signalstärken fallen korrespondierend zum Abstand beider Sende-/Empfangseinheiten ab, so dass ein Lösen oder eine Fehlstellung der Füllstandsmesseinrichtung ermittelt werden kann.

Alternativ oder zusätzlich können die Überwachungsmittel zumindest einen elektrischen, optischen, magnetischen, akustischen oder mechanischen Sensor umfassen, der mit einem auf dem Behälter oder der Befestigungseinheit vorgesehen Detektiermittel wechselwirken kann.

In einer weiteren Ausführungsform der vorliegenden Erfindung ist die Füllstandsmesseinheit eingerichtet, einen Füllstand basierend auf einer Laufzeitmessung eines abgestrahlten und auf die Füllstandsmesseinheit reflektierten Signals, vorzugsweise ein Radarsignal oder ein Mikrowellensignal, zu bestimmen. In diesem Fall sind die Überwachungsmittel eingerichtet, um das reflektierte Signal auszuwerten und ein Lösen der Befestigung der Füllstandmesseinrichtung vom Behälter zu ermitteln. Das reflektierte Signal wird nicht nur am Medium reflektiert, dessen Füllstand im Behälter ermittelt werden soll, sondern zumindest teilweise auch an anderen Grenzflächen, die sich als sogenannte Echos im Reflektionsmuster zeigen. Für bekannte Anordnungen der Füllstandsmesseinrichtung an bekannten Behältern ergeben sich somit bestimmte Reflektionsmuster hinsichtlich der Echos. Diese Echos können somit herangezogen werden, um ein Lösen vom oder eine Fehlposition der Füllstandsmesseinrichtung am Behälter zu ermitteln, da sich in diesem Fall das Reflektionsmuster hinsichtlich der Echos feststellbar verändert. Auch hier ist darauf hinzuweisen, dass eine Auswertung der Reflektionsmuster vorzugsweise unmittelbar in einer Datenverarbeitungseinheit/Prozessoreinheit der Füllstandmesseinrichtung erfolgt. Alternativ oder zusätzlich können die Beschleunigungswerte auch an eine andere Datenverarbeitungseinheit/Prozessoreinheit über die Sende-/Empfangseinheit übermittelt werden und in dieser Datenverarbeitungseinheit/Prozessoreinheit ausgewertet werden.

Ferner betrifft die vorliegende Erfindung ein System, wobei das System umfasst: einen Behälter zur Aufnahme eines Mediums und zumindest eine oben beschriebene Füllstandsmesseinrichtung, wobei die Füllstandsmesseinrichtung mittels der Befestigungseinheit an dem Behälter befestigt ist. Vorzugsweise ist der Behälter ein zum Waren-/Medientransport vorgesehener Behälter oder Container, vorzugsweise ein sogenannter Intermediate Bulk Container (IBC), ein Schiffscontainer, ein Eisenbahntank oder ein Abfallbehälter.

Nachfolgend wird eine detaillierte Beschreibung der Figuren gegeben. Darin zeigt:
- **Figur 1**: eine schematische Ansicht eines Behälters mit einer Füllstandsmesseinrichtung;
- **Figur 2**: eine schematische Ansicht der Füllstandsmesseinrichtung aus Figur 1;
- **Figur 3**: eine schematische Ansicht eines verformten Behälters mit einer gelösten Füllstandsmesseinrichtung;
- **Figur 4**: eine schematische Ansicht einer Ausführungsform einer erfindungsgemäßen Füllstandsmesseinrichtung;
- **Figur 5**: eine schematische Ansicht typischer Beschleunigungswerte, die beim Be- und Entladen eines Behälter auftreten;
- **Figur 6**: eine schematische Ansicht typsicher Beschleunigungswerte, die auf einen Behälterverlust hinweisen;
- **Figur 7**: ein bevorzugter Programmablauf bei Einsatz der in Figur 4 dargestellten Ausführungsform einer erfindungsgemäßen Füllstandsmesseinrichtung;
- **Figur 8**: eine schematische Ansicht eines Teils des Kolbenoberteils aus Figur 1;
- **Figur 9**: eine schematische Ansicht einer nicht erfindungsgemäßen Füllstandsmesseinrichtung;
- **Figur 10**: ein bevorzugter Programmablauf bei Einsatz der nicht erfindungsgemäßen Füllstandsmesseinrichtung;
- **Figur 11**: eine schematische Ansicht einer weiteren Ausführungsform einer erfindungsgemäßen Füllstandsmesseinrichtung; und
- **Figur 12**: ein bevorzugter Programmablauf bei Einsatz der in Figur 11 dargestellten Ausführungsform einer erfindungsgemäßen Füllstandsmesseinrichtung.

In der nachfolgenden Beschreibung der Figuren werden gleiche Bezugszeichen für gleiche oder ähnliche Objekte verwendet, wobei nur die jeweiligen Unterschiede erläutert werden und die Erläuterungen daher für alle Objekte gelten, soweit Unterschiede nicht ausdrücklich erläutert werden.

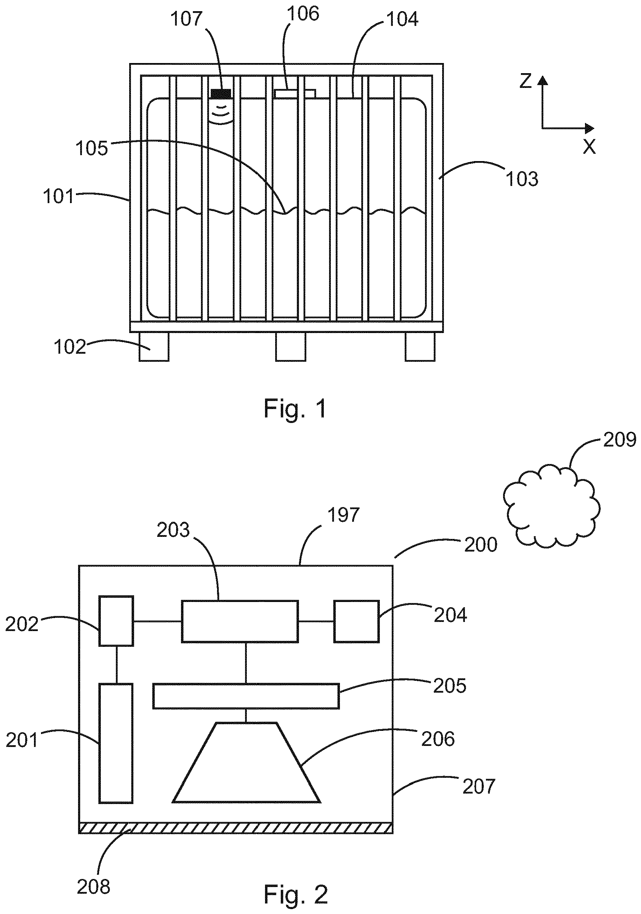

Figur 1 zeigt ein Beispiel eines sogenannten IBCs 101, der zum Transport von Medien eingesetzt wird. Diese gewichts-, volumen- und kostenoptimierte Bauweise ist insbesondere in der Distributions- und Logistikbranche sehr beliebt, und ermöglicht die einfache Versorgung von Kunden mit den unterschiedlichsten Medien. Der IBC 101 besteht üblicherweise aus einer Palette 102, einem Metallrahmen 103 sowie einer vorzugsweise aus Kunststoff gefertigten Behälterblase 104, die das Füllgut 105 beinhaltet. Über einen Deckel 106 kann das Medium 105 in den Behälter 101 bzw. in die Behälterblase 104 eingebracht werden.

Ein Füllstandsmesseinrichtung 107, die typischerweise an einer oberen Oberfläche der Behälterblase 104 angebracht wird, kann beispielsweise unter Verwendung elektromagnetischer Wellen den Abstand zur Füllgutoberfläche 105 messen, und nach außen hin bereitstellen.

Figur 2 zeigt eine bekannte Füllstandsmesseinrichtung 107, in der Ausführungsform als Radarmessgerät 200. Das Radarmessgerät 200 umfasst einen Energiespeicher 201, beispielsweise eine Batterie 201, eine Netzteileinheit 202, eine Datenverarbeitungseinheit in Form einer Prozessoreinheit 203, ein Sende- und Empfangseinheit 204 zu Kommunikation mit einer zentralen Datenverarbeitungseinheit 209, eine Hochfrequenzeinheit 205, sowie eine Radar-Antenne 206. Das Radarmessgerät 200 weist ein hermetisch geschlossenes Gehäuse 207 auf.

Das Radarmessgerät 200 strahlt über die Radar-Antenne 206 Radarsignale, vorzugsweise im Bereich von 6 GHz, 24 GHz, 57 bis 64 GHz, 75 bis 85 GHz oder höheren Frequenzen, in Richtung einer Füllgutoberfläche des Füllguts 105 ab, und empfängt die an der Füllgutoberfläche reflektierten Signale nach einer entsprechenden Laufzeit. Die empfangenen Signale werden von der Hochfrequenzeinheit 205 in niederfrequente Signale umgesetzt, und an die Prozessoreinheit 203 weitergeleitet, die den Abstand zum Füllgut 105 errechnet und über die Sende-/Empfangseinheit 204 an eine Datenverarbeitungseinheit 209 übermittelt, beispielsweise eine Kombination aus Cloud-Speicher und Cloudcomputing-Lösung 209.

Die Sende-/Empfangseinheit 204 ist vorzugsweise zur drahtlosen Kommunikation mit der Datenverarbeitungseinheit 209 eingerichtet, wobei die Sende-/Empfangseinheit 204 vorzugsweise eine Wireless Area Network (WLAN) Schnittstelle, eine Bluetooth Schnittstelle, eine ZigBee Schnittstelle, eine Long Range Wide Area Network (LoRaWAN) Schnittstelle, eine Sigfox Schnittstelle, eine Narrowband IoT (NB-IoT) Schnittstelle, eine MIOTY Schnittstelle oder eine Mobilfunk-Schnittstelle umfasst.

Füllstandsmesseinrichtungen 107 werden in der Praxis häufig mit Hilfe eines Klebebandes 208, beispielsweise eines Acrylatklebebandes 208, auf die Oberfläche der Behälterblase 104 aufgeklebt. Das Acrylatklebeband 208 dichtet dabei den Zwischenraum zwischen der Füllstandsmesseinrichtung 107 und der Oberfläche der Behälterblase 104 ab. Darüber hinaus dient das Acrylatklebeband 208 als mechanische Ausgleichsschicht, um ggf. vorhandene Unebenheiten der Oberfläche der Behälterblase 104 auszugleichen. Alternativ oder zusätzlich können auch andere Befestigungseinheiten/- vorrichtungen eingesetzt werden, bei denen die Füllstandsmesseinrichtung 107 beispielsweise mit Bändern befestigt wird, die um den Metallrahmen 103 angeordnet werden können. Weitere Befestigungsmöglichkeiten sind dem Fachmann bekannt und können mit der vorliegenden Erfindung kombiniert werden.

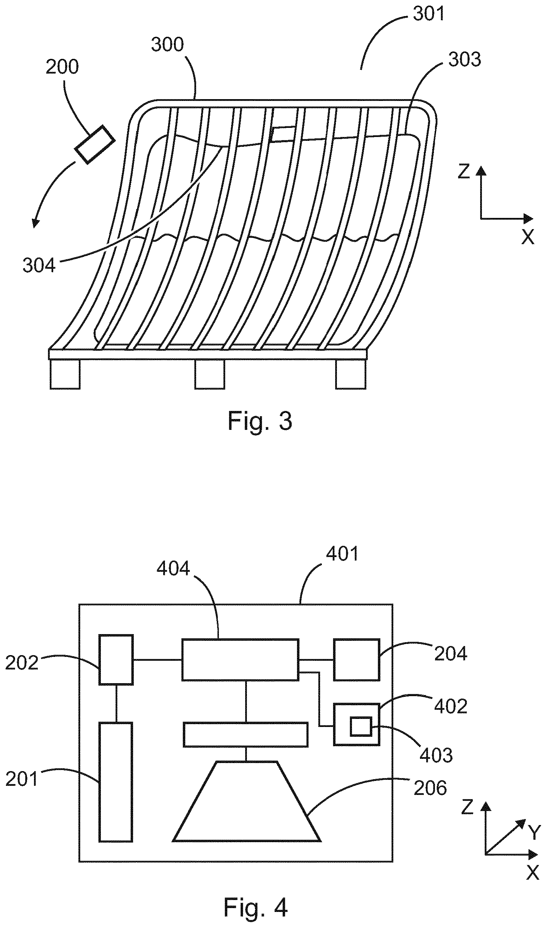

Ein bekannter Nachteil solcher IBCs ist die mechanische Instabilität, die auf die Kosten- und Gewichtsoptimierung zurückzuführen ist. Figur 3 zeigt beispielhaft einen IBC 301, wie er beispielsweise nach einer Kollision bei einem Be- oder Entladevorgang aussehen kann. Durch äußere mechanische Krafteinwirkungen wurde der Metallrahmen 302 stark verformt, wobei die Behälterblase 303 zwar grundsätzlich noch intakt ist, allerdings wurde diese durch die Krafteinwirkung mechanisch irreversibel verformt. Dies kann zur Folge haben, dass die Behälteroberfläche 304 auch in dem Bereich stark verformt wurde, wo eine Füllstandsmesseinrichtung, beispielsweise ein Radarmessgerät 200, angeordnet ist. Dabei kann es vorkommen, dass das Befestigungsmittel, hier beispielsweis das Acrylatklebeband 208, nicht mehr in der Lage ist den erforderlichen mechanischen Ausgleich zwischen der Füllstandsmesseinrichtung und der Behälteroberfläche bereitzustellen, so dass sich die Füllstandsmesseinrichtung vom IBC 301 lösen kann und diese möglicherweise unbemerkt zu Boden fällt. Typischerweise bleiben die Füllstandsmesseinrichtungen auch nach dem Lösen und Aufschlag auf dem Boden funktionsfähig, d.h. diese nehmen weiterhin Messungen vor und übermitteln diese Messungen an die Datenverarbeitungseinrichtung 209.

Figur 4 zeigt eine Ausführungsform einer erfindungsgemäßen Füllstandsmesseinrichtung 401 in Form eines Radarmessgeräts 400 mit einem Überwachungsmittel 402, das eingerichtet ist, um eine vorgesehene Befestigung der Füllstandsmesseinrichtung 401 an dem Behälter zu überwachen und einen Behälterverlust, also ein Lösen der Füllstandsmesseinrichtung 401 vom IBC 301, festzustellen. In dem Ausführungsbeispiel umfassen die Überwachungsmittel 402 zumindest einen Beschleunigungssensor 403, vorzugsweise einen 3-Achsen Beschleunigungssensor 403. Durch eine Auswertung der Beschleunigungsdaten des Beschleunigungssensors 403 in einer Ablauflogik einer Prozessoreinheit 404 kann eine falsche Positionierung bzw. ein Behälterverlust der Füllstandsmesseinrichtung 401 ermittelt werden.

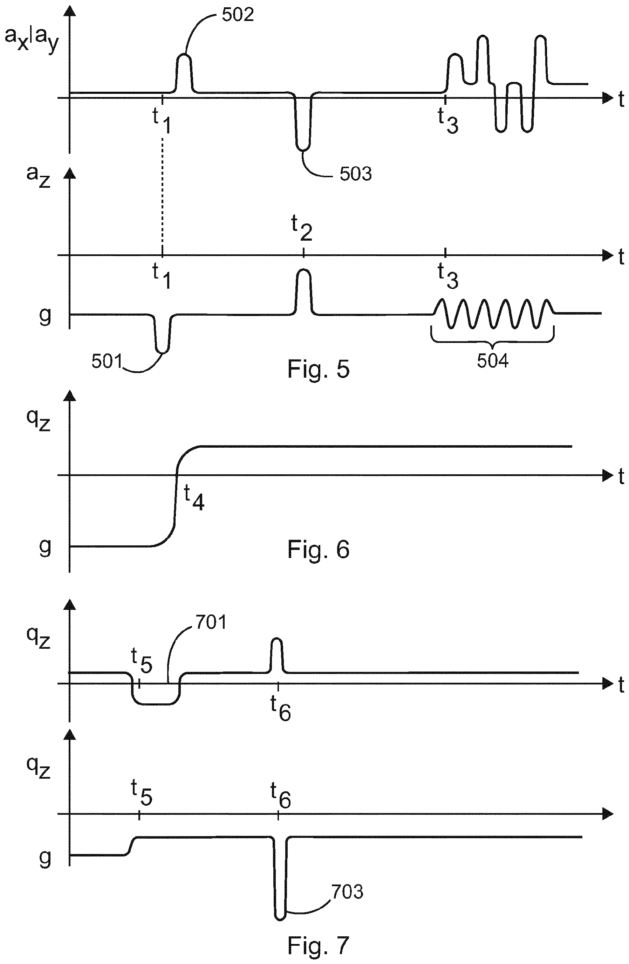

Die Figuren 5, 6 und 7 zeigen beispielhaft vom Beschleunigungssensor 403 erfasste Beschleunigungsdaten, die auf typische Bewegungsmuster zurückgehen. Figur 5 zeigt zunächst beispielhafte Beschleunigungswerte, die bei typischen Be- und Entladevorgänge eines IBC 101 auftreten. Im Ruhezustand zwischen t=0 und t=t₁ erfassen die in X- und Y-Richtung messenden Sensoren keine Beschleunigungswerte, wohingegen der in Z-Richtung messende Sensor die Erdbeschleunigung g mit einem Wert von 9,81 m/s² als negativen Wert erfasst. Zum Zeitpunkt t=t₁ wird der IBC 101 von einem Gabelstapler angehoben, was zu einer Erhöhung des negativen Beschleunigungswerts in Z-Richtung (vgl. Bezugszeichen 501) führt, da der IBC 101 noch oben beschleunigt wird. Zwischen t₁ und t₂ wird der IBC 101 beispielsweise zu einem LKW transportiert. Die korrespondierenden Beschleunigungswerte (vgl. Bezugszeichen 502, 503) sind im Wesentlichen in X-und Y-Richtung erfassbar. Zum Zeitpunkt t=t₂ wird der IBC 101 beispielsweise auf einem LKW abgesetzt, was an der verringerten Beschleunigung in Z-Richtung abgeleitet werden kann. Ab dem Zeitpunkt t₃ befindet sich der LKW in Fahrt, wodurch starke Ausschläge der Beschleunigungssensoren in X- und Y-Richtung verursacht werden. Die leichten Abweichungen (vgl. Bezugszeichen 504) des Z-Sensors entstehen durch fahrbedingte Vibrationen des IBCs 101. Die zuvor aufgezeigten Beschleunigungsverläufe sind insbesondere bei einer gleichzeitigen Auswertung aller drei Richtungen charakteristisch, und können vorzugsweise vorab durch Werksvorgaben in einer der Prozessoreinheit 404 zugeordneten Speichereinheit hinterlegt werden.

Figur 6 zeigt die vom Beschleunigungssensor 403 erfassten Beschleunigungsdaten, die einen Behälterverlust wiedergeben. Zum Zeitpunkt t=t₄ wechselt die Z-Komponente der Beschleunigung auf einen positiven Wert und verbleibt im positiven Bereich dort. Hieraus kann abgeleitet werden, dass ein Behälterverlust vorliegen muss, da der Beschleunigungssensor und damit die Füllstandsmesseinrichtung 401 offensichtlich nach oben ausgerichtet sind. Somit kann bereits aufgrund der Auswertung der Beschleunigungsdaten in Z-Richtung festgestellt werden, ob ein Behälterverlust vorliegt.

Wie in Figur 7 beispielhaft gezeigt, können neben den Beschleunigungsdaten in Z-Richtung zusätzlich auch die Beschleunigungswerte in X- und Y-Richtung herangezogen werden. Im in Figur 7 gezeigten Beispiel, erfährt der Beschleunigungssensor und damit der Behälter 401 beispielsweise einen seitlichen Schlag - was zu dem charakteristischen lateralen Beschleunigungsmuster (vgl. Bezugszeichen 701) führt, dessen Zeitdauer deutlich kleiner als beispielsweise 1 Sekunde ist. Wird zeitlich parallel dazu ein Rückgang der Beschleunigung in Z-Richtung (vgl. Bezugszeichen 702) erfasst, kann davon ausgegangen werden, dass der Beschleunigungssensor in Richtung Boden bewegt wird. Um eine Verwechslung mit den Beschleunigungswerten eines Beladevorgangs (vgl. Figur 5) zu vermeiden, kann zudem auf die stark erhöhte negative Beschleunigung (vgl. Bezugszeichen 703) abgestellt werden, die ein Aufschlagen des Beschleunigungssensors auf dem Boden wiedergibt. Die beschriebenen Beschleunigungsmuster erlaubt somit eine zuverlässige Erkennung eines Lösens der Füllstandsmesseinrichtung, d.h. eines Behälterverlustes. In einer der Prozessoreinheit 404 zugeordneten Speichereinheit können weitere Bewegungsmuster hinterlegt werden, die auf die jeweiligen Einsatzgebiete einer erfindungsgemäßen Füllstandsmesseinrichtung angepasst sind.

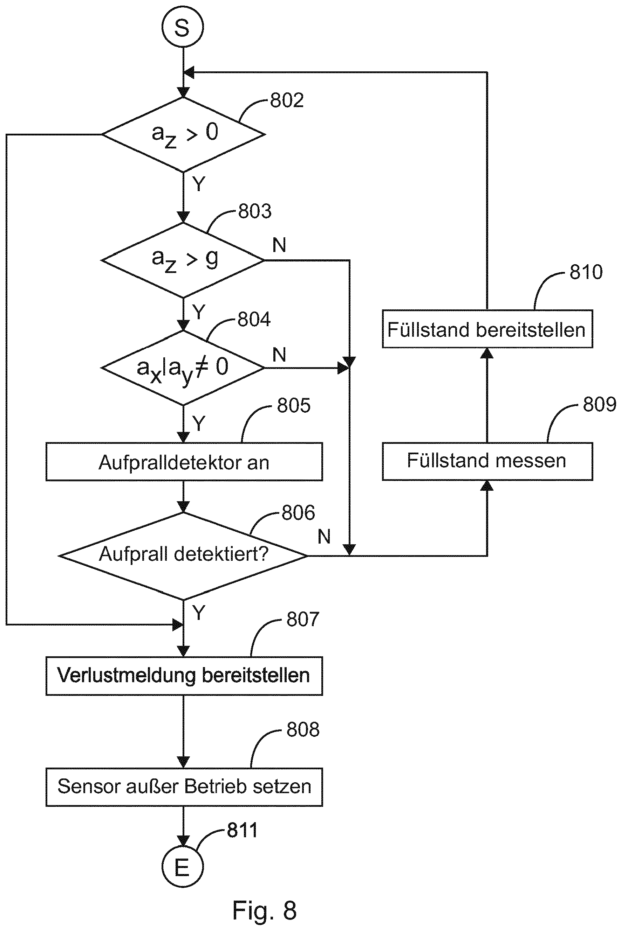

Figur 8 zeigt beispielhaft einen Programmablauf im Zusammenhang mit dem in Figur 4 dargestellten Ausführungsbeispiel. Der Ablauf beginnt im Startzustand 801. Im Schritt 802 wird zunächst überprüft, ob die Vertikalbeschleunigung größer als 0 ist. Alternativ wäre es im Schritt 802 ebenfalls möglich zu ermitteln, ob die Vertikalbeschleunigung von einem vorbestimmten Betrag vom zu erwartenden Wert von 9,81 m/s² für ein vorbestimmtes Zeitintervall abweicht. Ist dies der Fall, so wird im Schritt 807 über die Sende-/Empfangseinheit 204 eine Alarmmeldung in Form einer Behälterverlustmeldung bereitgestellt und an eine Datenverarbeitungseinheit übermittelt, was einem Betreiber der Füllstandsmesseinrichtung ermöglicht, entsprechende Wartungsmaßnahmen zu ergreifen. Vorteilhafterweise wird in der Alarmmitteilung ebenfalls der Standort der Füllstandsmesseinrichtung übermittelt. Abschließend wird die Füllstandsmesseinrichtung im Schritt 808 außer Betrieb gesetzt, um fehlerhaft Messungen zu vermeiden. Dabei können die Positionsdaten weiterhin übertragen werden.

Ergibt die Überprüfung im Schritt 802 keine positive Beschleunigung, so wird im Schritt 803 überprüft, ob die Vertikalbeschleunigung größer als die negative Erdbeschleunigung ist. Ist dies nicht der Fall, so wird der Füllstandsmesseinrichtung nicht nach unten hinbewegt, so dass in den Verfahrensschritten 809 und 810 mit einer Füllstandmessung und einer anschließenden Datenübermittlung begonnen werden kann. Andernfalls wird weiter überprüft, ob die lateralen Beschleunigungswerte ungleich 0 sind. Ist dies der Fall, so wird vermutet, dass ein Behälterverlust gerade erfolgt und im Schritt 805 ermittelt wird, ob der Beschleunigungssensor einen Aufprall, beispielsweise einen starken Ausschlag in Z-Richtung, detektiert. Ist dies der Fall werden wiederum die Verfahrensschritt 807 und 808 durchgeführt. Andernfalls liegt kein Behälterverlust vor, und die Füllstandsmesseinrichtung ermittelt den Füllstand durch Übergang in den Schritt 809.

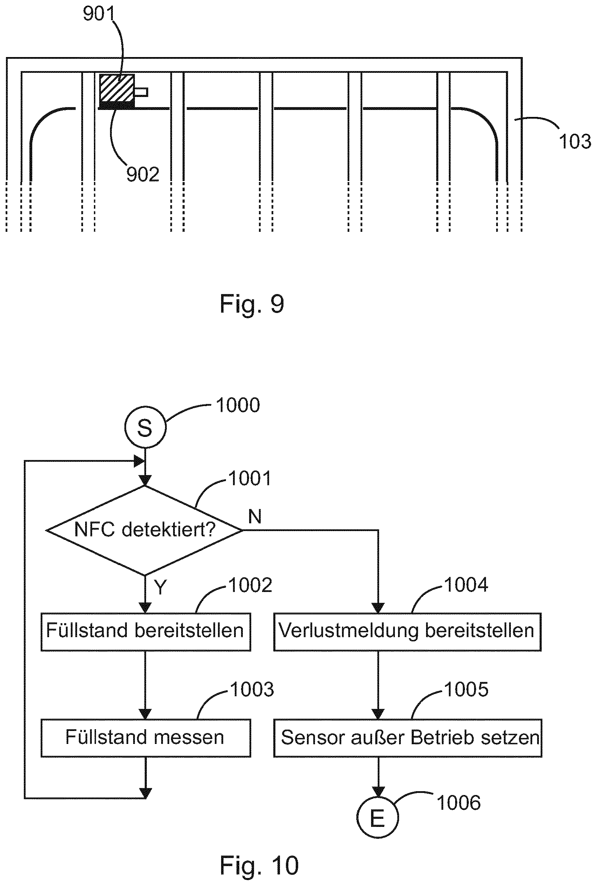

Figur 9 zeigt eine nicht erfindungsgemäße Füllstandsmesseinrichtung 901.

Dabei wird kein Beschleunigungssensor eingesetzt, sondern eine kombinierte mechanisch-elektrische Erkennung eines möglichen Behälterverlustes. Das Überwachungsmittel 402 der Füllstandsmesseinrichtung 901 umfasst hierbei eine RFID-Sende-/Empfangseinheit oder eine NFC-Sende-/Empfangseinheit 902 auf. Weiterhin wird eine korrespondierende RFID-Sende-/Empfangseinheit oder eine NFC-Sende-/Empfangseinheit auf einer geeigneten Oberfläche des IBC 101 aufgebracht, so dass die korrespondierende Sende-/Empfangseinheiten miteinander kommunizieren können. Eine solche Sende-/Empfangseinheit kann beispielsweise mittels eines Versiegelungsklebepads 903 auf der Behälterblase 104 aufgebracht werden. Ein solches Versiegelungsklebepad 904 kann einen RFID-Chip oder einen NFC-Chip aufnehmen und ist dabei dennoch ausreichend flexibel, so dass ein Ablösen des Versiegelungsklebepads 903 vom IBC 101 im Falle einer Behälterverformung wirksam verhindert werden kann. Die Sende-/Empfangseinheit, beispielsweise ein NFC-Reader oder ein RFID-Reader kontrolliert nun vor Beginn einer Messung, ob der NFC-Chip oder der RFID-Chip in der unmittelbaren Nähe angeordnet ist. Figur 10 zeigt beispielhaft einen zugehörigen Programmablauf. Der Ablauf beginnt im Schritt 1000. Im Schritt 1001 wird zunächst geprüft, ob die korrespondierenden Sende-/Empfangseinheiten in unmittelbarer Umgebung zueinander angeordnet sind. Ist dies der Fall, so liegt kein Behälterverlust vor, und der Füllstandwert kann durch Übergang in den Schritt 1002 bestimmt und im Schritt 1003 an eine Datenverarbeitungseinheit übertragen werden. Wird im Schritt 1001 jedoch keine korrespondierende Sende-/Empfangseinheit ermittelt, so wird ein Behälterverlust erkannt. Durch Übergang in den Schritt 1004 wird in diesem Falle eine Alarmmeldung an die Datenverarbeitungseinheit übermittelt, und im Schritt 1005 die Füllstandsmesseinrichtung außer Betrieb genommen.

Die Füllstandsmesseinrichtung unter Einsatz von Nahbereichs-Sende-/Empfangsmittel kann insoweit abgewandelt werden, das alternativ oder zusätzlich die Überwachungsmittel mit einen elektrischen, optischen, magnetischen, akustischen und/oder mechanischen Sensor ausgestattet werden, um mit einem auf dem IBC oder der Befestigungseinheit vorgesehen Detektiermittel wechselzuwirken. Beispielsweise kann vorgesehen sein, das Vorhandensein bzw. eine vorgesehene Anordnung des Versiegelungsklebepads 903 auf der Behälterblase 104 elektrisch (beispielsweise mittels einer Anordnung von einer oder mehrerer Leiterbahnen auf dem Versiegelungspad mit Sollbruchstelle), optisch (beispielsweise mittels Sensoren mit Reflexionsauswertung), magnetisch, akustisch oder auch mechanisch (beispielsweise mittels eines Tasters) zu verifizieren.

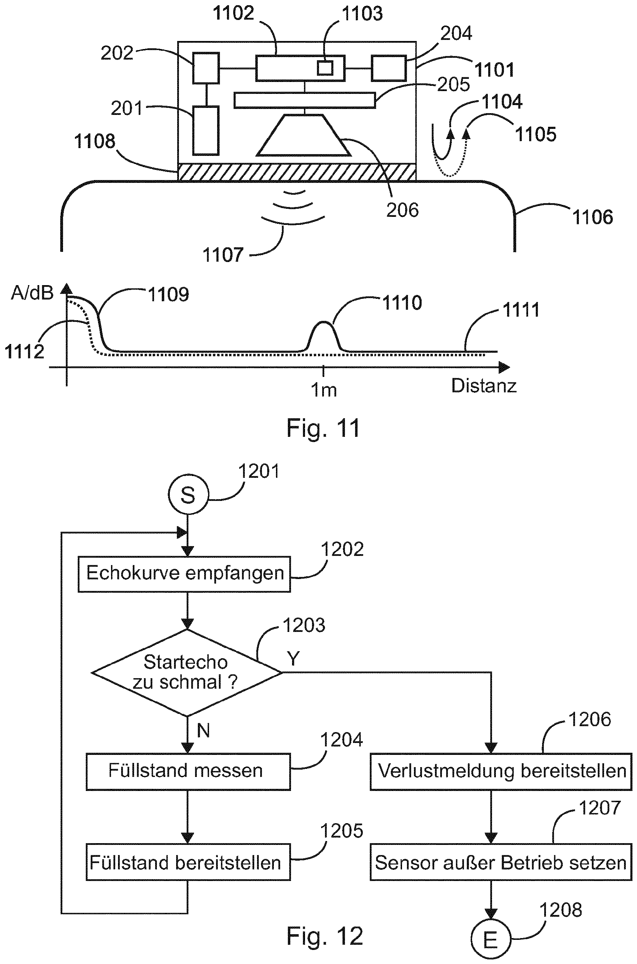

Figur 11 zeigt eine weitere Ausführungsform einer erfindungsgemäßen Füllstandsmesseinrichtung 1101, die insbesondere bei Verwendung eines Radarsensors eingesetzt werden kann. Wenn in einem Normalbetrieb die Füllstandsmesseinrichtung 1101 auf einer Oberfläche des IBC 1106 befestigt ist, wird das von der Radar-Antenne 206 abgestrahlte Radarsignal 1107 teilweise am Übergang zu einer Klebeschicht 1108 reflektiert (vgl. Bezugszeichen 1104) und, zeitlich leicht verzögert, wiederum am Übergang zum IBC 1106 (vgl. Bezugszeichen 1105). Die durch diese Reflektionen verursachten Echos überlagern sich dabei aufgrund der geringen räumlichen Distanz der jeweiligen Reflexionsstellen, und führen im Reflektionsmuster zu einer Echokurve 1110 mit einem charakteristisch breiten Echo 1109 am Anfang der Echokurve 1110. Im Falle eines Behälterverlustes entfällt die zweite Grenzfläche bzw. Reflexionsstelle am IBC 1106, was dazu führt, dass die Radar-Antenne 206 eine andere Echokurve 1111 empfängt, die an deren Beginn durch ein deutlich schmaleres Echo 1112 charakterisiert ist. Figur 12 zeigt beispielhaft einen Programmablauf im Zusammenhang mit diesem

Ausführungsbeispiel. Der Ablauf beginnt im Schritt 1201. Im Schritt 1202 wird zunächst eine Echokurve empfangen, wobei im Schritt 1203 die Breite des Echos am Beginn der Echokurve 1109, 1112 bestimmt wird. Ist die Breite des Echos am Beginn der Echokurve 1109, 1112 unterhalb eines vorbestimmten Wertes, wird davon ausgegangen, dass ein Behälterverlust vorliegt. In diesem Falle wird durch einen Übergang zu den Schritten 1206, 1207 eine Alarmmitteilung erstellt, an die Datenverarbeitungseinheit übermittelt und die Füllstandsmesseinrichtung 1101 wird außer Betrieb gesetzt. Andernfalls wird im Schritt 1204 der Füllstand ermittelt, und im Schritt 1205 an die Datenverarbeitungseinheit übermittelt. Zur Auswertung und dem Vergleich der unterschiedlichen Echokurven umfasst die Überwachungsmittel vorzugsweise eine Prozessoreinheit 1102 mit einem zugeordneten Speichermittel 1103, die eingerichtet sind, ein Programm zur Analyse der Echokurven auszuführen.

Es wird darauf hingewiesen, dass die Erfindung nicht auf die Anwendung an einem IBC beschränkt ist. Die vorliegende Erfindung kann allgemein an Behältern oder Containern eingesetzt werden, die zum Waren-/Medientransport eingesetzt werden, beispielsweise Schiffscontainer, Eisenbahntanks oder Abfallbehälter. Darüber hinaus kann insbesondere auch bei der Überwachung von Gewässern oder Abwasserkanälen im Überflutungsfall oder im Sabotagefall ein oben beschriebener Behälterverlust eintreten, so dass auch dort die vorliegende Erfindung eingesetzt werden kann. Unter dem Begriff Behälterverlust wird vorliegend ein völliges Lösen der Füllstandsmesseinrichtung vom Behälter oder auch eine Positionsänderung aus einer vorgesehenen Positionierung verstanden, bei der keine zuverlässige Füllstandsmessung mehr durchgeführt werden kann.

Die vorliegende Erfindung ist dabei nicht auf die vorhergehenden bevorzugten Ausführungsformen beschränkt, solange sie vom Gegenstand der folgenden Ansprüche umfasst ist. Insbesondere können die oben erläuterten Ausführungsformen auch miteinander kombiniert werden, um mit noch größerer Zuverlässigkeit einen Behälterverlust ermitteln zu können.

## Patentansprüche

1. Füllstandsmesseinrichtung (401, 901, 1101) zur Messung eines Füllstandes eines Behälters, umfassend:
eine Füllstandsmesseinheit, eingerichtet zur Messung eines Füllstandes eines Behälters;
zumindest eine Sende-/Empfangseinheit (204), eingerichtet zur Kommunikation mit einer Datenverarbeitungseinheit (209);
zumindest eine Befestigungseinheit (208, 902, 1108), eingerichtet zur Befestigung der Füllstandsmesseinrichtung (401, 901, 1101) an einer Oberfläche des Behälters (103, 301, 1106);
zumindest ein Überwachungsmittel, eingerichtet zur Überwachung einer durch die zumindest eine Befestigungseinheit (208, 902, 1108) bereitgestellten Befestigung der Füllstandsmesseinrichtung (401, 901, 1101) an dem Behälter (103, 301, 1106), **dadurch gekennzeichnet, dass** die Überwachungsmittel weiterhin eingerichtet sind, um über die Sende-/Empfangseinheit (204) eine Alarmmitteilung an die Datenverarbeitungseinheit (209) zu übermitteln, wenn die Überwachungsmittel ein Lösen der Befestigung der Füllstandmesseinrichtung (401, 901, 1101) vom Behälter (103, 301, 1106) ermitteln, wobei die Überwachungsmittel zumindest einen Beschleunigungssensor (403) umfassen, der eingerichtet ist, um eine Beschleunigung der Füllstandsmesseinrichtung (401, 901, 1101) zumindest in eine Richtung parallel zur Erdbeschleunigung zu erfassen, wobei der Beschleunigungssensor (403) vorzugsweise ein 3-Achsen Beschleunigungssensor (403) ist, wobei die Überwachungsmittel eingerichtet sind, die Beschleunigungswerte des Beschleunigungssensors (403) auszuwerten, um zu ermitteln, ob ein Lösen der Befestigung der Füllstandmesseinrichtung (401, 901, 1101) vom Behälter (103, 301, 1106) vorliegt.

2. Füllstandsmesseinrichtung (401, 901, 1101) nach Anspruch 1, wobei die Überwachungsmittel weiterhin eingerichtet sind, um die Füllstandsmesseinrichtung (401, 901, 1101) bzw. die Füllstandsmesseinheit nach Übermittlung der Alarmmitteilung zu deaktivieren.

3. Füllstandsmesseinrichtung (401, 901, 1101) nach einem der Ansprüche 1 oder 2, wobei die Sende-/Empfangseinheit (204) zur drahtlosen Kommunikation mit der Datenverarbeitungseinheit (209) eingerichtet ist, wobei die Sende-/Empfangseinheit vorzugsweise eine Wireless Area Network (WLAN) Schnittstelle, eine Bluetooth Schnittstelle, eine ZigBee Schnittstelle, eine Long Range Wide Area Network (LoRaWAN) Schnittstelle, eine Sigfox Schnittstelle, eine Narrowband IoT (NB-IoT) Schnittstelle, eine MIOTY Schnittstelle oder eine Mobilfunk-Schnittstelle umfasst.

4. Füllstandsmesseinrichtung (401, 901, 1101) nach einem der vorhergehenden Ansprüche, wobei die Befestigungseinheit (208, 902, 1108) eine Klebeschicht, vorzugsweise einer Acrylatklebeschicht, umfasst, mit der die Füllstandsmesseinrichtung (401, 901, 1101) an einem Behälter (103, 301, 1106) befestigbar ist.

5. Füllstandsmesseinrichtung (401, 901, 1101) nach einem der vorhergehenden Ansprüche, wobei die Befestigungseinheit (208, 902, 1108) zumindest ein Spann-oder Bandelement umfasst, mit der die Füllstandsmesseinrichtung (401, 901, 1101) an einem Behälter (103, 301, 1106) befestigbar ist.

6. Füllstandsmesseinrichtung (401, 901, 1101) nach einem der vorhergehenden Ansprüche, wobei die Füllstandsmesseinrichtung (401, 901, 1101) weiterhin zumindest ein Positionsbestimmungsmittel umfasst, vorzugsweise eine GPS-Einheit, eingerichtet, um über die Sende-/Empfangseinheit (204) Positionsdaten der Füllstandsmesseinrichtung (401, 901, 1101) an die Datenverarbeitungseinheit (209) zu übermitteln, wobei die Alarmmitteilung vorzugsweise Positionsdaten der Füllstandsmesseinrichtung (401, 901, 1101) umfasst.

7. Füllstandsmesseinrichtung (401, 901, 1101) nach einem der vorhergehenden Ansprüche, wobei die Überwachungsmittel eine Nahbereichs-Sende-/Empfangseinheit (904) umfassen, die zur drahtlosen Kommunikation mit einer am Behälter (103, 301, 1106) angeordneten Nahbereichs-Sende-/Empfangseinheit (903) eingerichtet ist.

8. Füllstandsmesseinrichtung (401, 901, 1101) nach Anspruch 7, wobei die Nahbereichs-Sende-/Empfangseinheit (904) eine RFID-Sende-/Empfangseinheit ist, die zur drahtlosen Kommunikation mit einer am Behälter (103, 301, 1106) angeordneten RFID-Sende-/Empfangseinheit eingerichtet ist.

9. Füllstandsmesseinrichtung (401, 901, 1101) nach Anspruch 7, wobei die Nahbereichs-Sende-/Empfangseinheit (904) eine NFC-Sende-/Empfangseinheit (904) ist, die zur drahtlosen Kommunikation mit einer am Behälter (103, 301, 1106) angeordneten NFC-Sende-/Empfangseinheit eingerichtet ist.

10. Füllstandsmesseinrichtung (401, 901, 1101) nach einem der vorhergehenden Ansprüche, wobei die Überwachungsmittel zumindest einen elektrischen, optischen, magnetischen, akustischen oder mechanischen Sensor umfassen, um mit einem auf dem Behälter (103, 301, 1106) oder der Befestigungseinheit (208, 902, 1108) vorgesehen Detektiermittel wechselzuwirken.

11. Füllstandsmesseinrichtung (401, 901, 1101) nach einem der vorhergehenden Ansprüche, wobei die Füllstandsmesseinheit eingerichtet ist, einen Füllstand basierend auf einer Laufzeitmessung eines abgestrahlten und auf die Füllstandsmesseinheit reflektierten Signals, vorzugsweise ein Radarsignal oder ein Mikrowellensignal, zu bestimmen, wobei die Überwachungsmittel eingerichtet sind, das reflektierte Signal auszuwerten, um zu ermitteln, ob ein Lösen der Befestigung der Füllstandmesseinrichtung (401, 901, 1101) vom Behälter (103, 301, 1106) vorliegt.

12. System, umfassend: einen Behälter (103, 301, 1106) zur Aufnahme eines Mediums und zumindest eine Füllstandsmesseinrichtung (401, 901, 1101) nach einem der Ansprüche 1 bis 11, wobei die Füllstandsmesseinrichtung (401, 901, 1101) mittels der Befestigungseinheit (208, 902, 1108) an dem Behälter (103, 301, 1106) befestigt ist.

13. System nach Anspruch 12, wobei der Behälter (103, 301, 1106) ein zum Waren-/Medientransport vorgesehener Behälter oder Container ist, vorzugsweise ein Intermediate Bulk Container (IBC), ein Schiffscontainer, ein Eisenbahntank oder ein Abfallbehälter.

## Claims

1. A level measuring device (401, 901, 1101) for measuring a level of a container, comprising:
a level measuring unit configured for measuring a level of a container;
at least one transmitting/receiving unit (204) configured to communicate with a data processing unit (209);
at least one mounting unit (208, 902, 1108) configured for mounting the level measuring unit (401, 901, 1101) to a surface of the container (103, 301, 1106);
at least one monitoring means configured to monitor an attachment of the level measuring device (401, 901, 1101) to the container (103, 301, 1106) provided by the at least one attachment unit (208, 902, 1108), **characterized in that**
the monitoring means are further configured to transmit an alarm message to the data processing unit (209) via the transceiver unit (204) when the monitoring means detects a detachment of the attachment of the level measuring device (401, 901, 1101) from the container (103, 301, 1106), wherein, the monitoring means comprise at least one acceleration sensor (403) configured to detect an acceleration of the level measuring device (401, 901, 1101) at least in a direction parallel to the acceleration due to gravity, wherein the acceleration sensor (403) is preferably a 3-axis acceleration sensor (403), wherein the monitoring means are configured to evaluate the acceleration values of the acceleration sensor (403) to determine whether there is a loosening of the attachment of the level measuring device (401, 901, 1101) from the container (103, 301, 1106).

2. Level measuring device (401, 901, 1101) according to claim 1, wherein said monitoring means are further configured to deactivate said level measuring device (401, 901, 1101) and said level measuring unit, respectively, upon transmission of said alarm message.

3. Level measuring device (401, 901, 1101) according to any one of claims 1 or 2, wherein the transmitting/receiving unit (204) is configured for wireless communication with the data processing unit (209), wherein the transmitting/receiving unit preferably comprises a wireless area network (WLAN) interface, a Bluetooth interface, a ZigBee interface, a long range wide area network (LoRaWAN) interface, a Sigfox interface, a narrowband loT (NB-loT) interface, a MIOTY interface or a cellular interface.

4. Level measurement device (401, 901, 1101) according to any one of the preceding claims, wherein the attachment unit (208, 902, 1108) comprises an adhesive layer, preferably an acrylate adhesive layer, with which the level measurement device (401, 901, 1101) can be attached to a container (103, 301, 1106).

5. Level measuring device (401, 901, 1101) according to any one of the preceding claims, wherein the fastening unit (208, 902, 1108) comprises at least one tensioning or banding element, with which the level measuring device (401, 901, 1101) can be fastened to a container (103, 301, 1106).

6. Level measuring device (401, 901, 1101) according to any of the preceding claims, wherein the level measuring device (401, 901, 1101) further comprises at least one position determining means, preferably a GPS unit, configured to transmit position data of the level measuring device (401, 901, 1101) to the data processing unit (209) via the transmitting/receiving unit (204), wherein the alarm message preferably comprises position data of the level measuring device (401, 901, 1101).

7. Level measuring device (401, 901, 1101) according to any of the preceding claims, wherein the monitoring means comprise a short-range transceiver unit (904) configured for wireless communication with a short-range transceiver unit (903) arranged at the container (103, 301, 1106).

8. Level measuring device (401, 901, 1101) according to claim 7, wherein the close range transceiver unit (904) is a RFID transceiver unit configured for wireless communication with a RFID transceiver unit arranged at the container (103, 301, 1106).

9. Level measuring device (401, 901, 1101) according to claim 7, wherein the short-range transceiver unit (904) is an NFC transceiver unit (904) configured for wireless communication with an NFC transceiver unit arranged at the container (103, 301, 1106).

10. Level measuring device (401, 901, 1101) according to any one of the preceding claims, wherein the monitoring means comprises at least one of an electrical, optical, magnetic, acoustic or mechanical sensor to interact with a detecting means provided on the container (103, 301, 1106) or the mounting unit (208, 902, 1108).

11. Level measuring device (401, 901, 1101) according to any one of the preceding claims, wherein the level measuring unit is configured to determine a level based on a time-of-flight measurement of a radiated signal, preferably a radar signal or a microwave signal, reflected onto the level measuring unit, wherein the monitoring means is configured to evaluate the reflected signal to determine whether there is a loosening of the attachment of the level measuring device (401, 901, 1101) from the container (103, 301, 1106).

12. System comprising: a container (103, 301, 1106) for reception of a medium; and at least one level measuring device (401, 901, 1101) according to any one of claims 1 to 11, wherein the level measuring device (401, 901, 1101) is attached to the container (103, 301, 1106) by means of the attachment unit (208, 902, 1108).

13. System according to claim 12, wherein the container (103, 301, 1106) is a container or container intended for goods/media transport, preferably an intermediate bulk container (IBC), a shipping container, a railroad tank or a waste container.

## Revendications

1. Dispositif de mesure de niveau de remplissage (401, 901, 1101) destiné à mesurer un niveau de remplissage d'un contenant, comprenant :
une unité de mesure de niveau de remplissage configurée pour mesurer un niveau de remplissage d'un contenant ;
au moins un émetteur-récepteur (204) configuré pour communiquer avec une unité de traitement de données (209) ;
au moins un ensemble de fixation (208, 902, 1108) configuré pour fixer le dispositif de mesure de niveau de remplissage (401, 901, 1101) sur une surface du contenant (103, 301, 1106) ;
au moins un moyen de surveillance configuré pour surveiller une fixation du dispositif de mesure de niveau de remplissage (401, 901, 1101) sur le contenant (103, 301, 1106) réalisée par le au moins un ensemble de fixation (208, 902, 1108),
**caractérisé en ce que** les moyens de surveillance sont en outre configurés pour transmettre un message d'alarme à l'unité de traitement de données (209) par l'intermédiaire de l'émetteur-récepteur (204), lorsque les moyens de surveillance déterminent que le dispositif de mesure de niveau de remplissage (401, 901, 1101) se détache du contenant (103, 301, 1106),
dans lequel les moyens de surveillance comprennent au moins un capteur d'accélération (403) qui est configuré pour détecter une accélération du dispositif de mesure de niveau de remplissage (401, 901, 1101) au moins dans une direction parallèle à l'accélération terrestre, dans lequel le capteur d'accélération (403) est de préférence un capteur d'accélération à 3 axes (403), dans lequel les moyens de surveillance sont configurés pour analyser des valeurs d'accélération du capteur d'accélération (403) afin de déterminer si le dispositif de mesure de niveau de remplissage (401, 901, 1101) se détache du contenant (103, 301, 1106).

2. Dispositif de mesure de niveau de remplissage (401, 901, 1101) selon la revendication 1, dans lequel les moyens de surveillance sont en outre configurés pour désactiver le dispositif de mesure de niveau de remplissage (401, 901, 1101) ou l'unité de mesure de niveau de remplissage après la transmission du message d'alarme.

3. Dispositif de mesure de niveau de remplissage (401, 901, 1101) selon l'une des revendications 1 ou 2, dans lequel l'émetteur-récepteur (204) est configuré pour communiquer sans fil avec l'unité de traitement de données (209), dans lequel l'émetteur-récepteur (204) comprend de préférence une interface de réseau local sans fil (WLAN), une interface Bluetooth, une interface ZigBee, une interface de réseau local à longue portée (Long Range Wide Area Network, LoRaWAN), une interface Sigfox, une interface IoT à bande étroite (NB-IoT), une interface MIOTY ou une interface radio mobile.

4. Dispositif de mesure de niveau de remplissage (401, 901, 1101) selon l'une des revendications précédentes, dans lequel l'ensemble de fixation (208, 902, 1108) comprend une couche d'adhésif, de préférence une couche d'adhésif acrylique, au moyen de laquelle le dispositif de mesure de niveau de remplissage (401, 901, 1101) peut être fixé sur le contenant (103, 301, 1106).

5. Dispositif de mesure de niveau de remplissage (401, 901, 1101) selon l'une des revendications précédentes, dans lequel l'ensemble de fixation (208, 902, 1108) comprend au moins un élément tendeur ou à bande, au moyen duquel le dispositif de mesure de niveau de remplissage (401, 901, 1101) peut être fixé sur le contenant (103, 301, 1106).

6. Dispositif de mesure de niveau de remplissage (401, 901, 1101) selon l'une des revendications précédentes, dans lequel le dispositif de mesure de niveau de remplissage (401, 901, 1101) comprend en outre au moins un moyen de détermination de position, de préférence une unité GPS, configurée pour transmettre des données de position du dispositif de mesure de niveau de remplissage (401, 901, 1101) à l'unité de traitement de données (209) par l'intermédiaire de l'émetteur-récepteur (204), dans lequel le message d'alarme comprend de préférence des données de position du dispositif de mesure de niveau de remplissage (401, 901, 1101).

7. Dispositif de mesure de niveau de remplissage (401, 901, 1101) selon l'une des revendications précédentes, dans lequel les moyens de surveillance comprennent un émetteur-récepteur à courte portée (904) qui est configuré pour communiquer sans fil avec un émetteur-récepteur à courte portée (903) agencé sur le contenant (103, 301, 1106).

8. Dispositif de mesure de niveau de remplissage (401, 901, 1101) selon la revendication 7, dans lequel l'émetteur-récepteur à courte portée (904) est un émetteur-récepteur RFID qui est configuré pour communiquer sans fil avec un émetteur-récepteur RFID agencé sur le contenant (103, 301, 1106).

9. Dispositif de mesure de niveau de remplissage (401, 901, 1101) selon la revendication 7, dans lequel l'émetteur-récepteur à courte portée (904) est un émetteur-récepteur NFC qui est configuré pour communiquer sans fil avec un émetteur-récepteur NFC agencé sur le contenant (103, 301, 1106).

10. Dispositif de mesure de niveau de remplissage (401, 901, 1101) selon l'une des revendications précédentes, dans lequel les moyens de surveillance comprennent au moins un capteur électrique, optique, magnétique, acoustique ou mécanique, afin d'interagir avec des moyens de détection prévus sur le contenant (103, 301, 1106) ou l'ensemble de fixation (208, 902, 1108).

11. Dispositif de mesure de niveau de remplissage (401, 901, 1101) selon l'une des revendications précédentes, dans lequel l'unité de mesure de niveau de remplissage est configurée pour déterminer un niveau de remplissage sur la base d'une mesure de temps de propagation d'un signal émis et réfléchi sur l'unité de mesure de niveau de remplissage, de préférence un signal radar ou un signal hyperfréquence, dans lequel les moyens de surveillance sont configurés pour analyser le signal réfléchi afin de déterminer si le dispositif de mesure de niveau de remplissage (401, 901, 1101) se détache du contenant (103, 301, 1106).

12. Système comprenant : un contenant (103, 301, 1106) destiné à recevoir un milieu et au moins un dispositif de mesure de niveau de remplissage (401, 901, 1101) selon l'une des revendications 1 à 11, dans lequel le dispositif de mesure de niveau de remplissage (401, 901, 1101) est fixé sur le contenant (103, 301, 1106) au moyen de l'ensemble de fixation (208, 902, 1108).

13. Système selon la revendication 12, dans lequel le contenant (103, 301, 1106) est un récipient ou un conteneur destiné au transport de marchandises/milieux, de préférence un grand récipient vrac (Intermediate Bulk Container, IBC), un conteneur de navire, un conteneur ferroviaire ou un conteneur de déchets.
